Europäisches Patentamt

European Patent Office

Office européen des brevets

(19)

(11) **EP 0 548 842 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.⁶: **G01N 27/406**

(21) Anmeldenummer: **92121594.3**

(22) Anmeldetag: **18.12.1992**

(54) **Verfahren zum Erfassen des Feuchtegehaltes von Gasen**

Device for determining the moisture content of gases

Dispositif pour déterminer la teneur en humidité des gaz

(84) Benannte Vertragsstaaten:
**AT BE CH DE DK ES FR GB GR IE IT LI LU MC NL PT SE**

(30) Priorität: **20.12.1991 DE 4142118**

(43) Veröffentlichungstag der Anmeldung:
**30.06.1993 Patentblatt 1993/26**

(73) Patentinhaber:
• **SAARBERGWERKE AKTIENGESELLSCHAFT**
**66104 Saarbrücken (DE)**
• **YOKOGAWA DEUTSCHLAND GmbH**
**40880 Ratingen (DE)**

(72) Erfinder: **Speicher, Hans-Josef**
**W-6637 Nalbach (DE)**

(56) Entgegenhaltungen:
EP-A- 0 434 085          WO-A-88/03268
US-A- 4 098 650          US-A- 4 851 103

• **PATENT ABSTRACTS OF JAPAN vol. 10, no. 288 (P-502)(2344) 30. September 1986 & JP-A-61 107 152**

**Beschreibung**

Die Erfindung betrifft ein Verfahren zum kontinuierlichen Erfassen des Feuchtegehaltes von Gasen, insbesondere von Rauchgasen, mit sich ändernder Zusammensetzung unter Verwendung eines Feststoff-Elektrolyt-Meßelementes.

Es ist bekannt, z.B. Zirkon-Meßelemente zum Messen des Feuchtegehaltes eines Gases mit, bis auf den Feuchtegehalt selbst, gleichbleibender Zusammensetzung,
d. h. gleichbleibender Sauerstoffkonzentration einzusetzen. Zirkon-Meßelemente bestehen im wesentlichen aus von zwei beheizten Platinelektroden, der Referenzelektrode und der Meßelektrode, eingefaßter Zirkonkeramik. Bei der Verwendung als Feuchte-Messer wird die Eigenschaft von Zirkonkeramik genutzt, sich bei hoher Temperatur gegenüber Sauerstoffionen wie ein fester Elektrolyt zu verhalten. Weisen die jeweils an der Meß- bzw. Referenzelektrode vorbeigeführten Gase unterschiedliche Sauerstoffpartialdrücke auf, so baut sich zwischen beiden Elektroden eine entsprechende elektrische Spannung auf, für die gemäß der Nernst'schen Gleichung die Beziehung gilt

$$E = \frac{R \cdot T}{n \cdot F} \cdot ln\frac{y}{d} + C$$

Dabei bedeuten:

E:  die elektrische Spannung
y:  die Sauerstoffkonzentration (Vol-%-$O_2$) an der Meßelektrode
d:  die Sauerstoffkonzentration (Vol-%-$O_2$) an der Referenzelektrode
R:  Gaskonstante
T:  absolute Temperatur
n:  Wertigkeit des Sauerstoffmoleküls (= 4)
F:  Faraday'sche Konstante
C:  Asymmetrie-Konstante (fertigungsbedingt)

Wird eine Elektrode mit einem Referenzgas mit definiertem $O_2$-Gehalt, z. B. Luft mit 21 Vol-%-$O_2$, und die zweite Elektrode mit einem Meßgas beaufschlagt, stellt die zwischen den Elektroden gemessene Spannung unmittelbar ein Maß für die Sauerstoffkonzentration des Meßgases dar. Ändert sich bei sonst gleichbleibender Zusammensetzung der Feuchtegehalt des Meßgases, so ändert sich aufgrund der geänderten volumetrischen Zusammensetzung auch die Sauerstoffkonzentration des Meßgases und damit die zwischen den Elektroden gemessene Spannung. Die Spannungsänderung ist demnach ein Maß für die Änderung des Feuchtegehaltes im Meßgas bzw. bei entsprechendem Abgleich der Meßschaltung für dessen Feuchtegehalt selbst.

Zur Bestimmung des Feuchtegehaltes von Gasen mit sich ändernder Zusammensetzung, deren Sauerstoffkonzentration also nicht ausschließlich durch den Feuchtegehalt, sondern auch durch Änderung der Volumenanteile weiterer Gaskomponenten beeinflußt wird, können Zirkon-Meßelemente jedoch nicht ohne weiteres eingesetzt werden.

Ein solches Gas mit sich ständig ändernder Zusammensetzung bzw. Sauerstoffkonzentration stellt z. B. Rauchgas aus Feuerungsanlagen dar. Für die Ermittlung und Überwachung der im Rauchgas enthaltenen Schadstoffkonzentration ist jedoch die Kenntnis des Feuchtegehaltes zur Bestimmung des Normvolumens notwendig. Bisher wurde bei der Bestimmung des Normvolumens des Rauchgases der Feuchtegehalt aufgrund der brennungsstöchiometrie als konstant eingerechnet. Dabei wurden Fehler von bis zu 10 % in Kauf genommen.

Zur Einhaltung der neuen, durch das Immissionsschutzgesetz vorgeschriebenen Emissionsgrenzwerte ist es jedoch notwendig geworden, die Rauchgasfeuchte kontinuierlich schnell und exakt zu erfassen. Auch zur exakten Einstellung der Luftzahl λ bei Primärentstickung durch Rauchgasrückführung zur Verbrennungsluft ist die genaue Kenntnis des Feuchtegehaltes erforderlich.

Zur Bestimmung des Feuchtegehaltes von Gasen mit sich ändernder Zusammensetzung, wie eben Rauchgase mit sich ändernden CO- und $CO_2$-Anteilen, wurde daher auch schon vorgeschlagen (DE-OS 36 37 218), aus dem Meßgasstrom kontinuierlich Meßgas abzuzweigen, auf eine definierte Restfeuchte zu trocknen und das nunmehr trockene Meßgas als Vergleichsgas einzusetzen, so daß die Zusammensetzung des Vergleichsgases, bis eben auf den Feuchtegehalt, zu jedem Zeitpunkt der Zusammensetzung des Meßgases entspricht. Dabei wurde von der Annahme ausgegangen, daß nunmehr eine Änderung der Volumenanteile der übrigen Gaskomponenten keinen Einfluß mehr auf das Meßergebnis hat und somit durch das Verhältnis der Sauerstoffpartialdrücke bzw. durch die Elektrodenspannung unmittelbar der Feuchtegehalt des unbehandelten Meßgases unter Berücksichtigung der Beziehung

$$P_{O_{2tr}} = P_{O_{2ft}} \cdot \frac{100}{100\text{-}MB_{H_2O}}$$

bestimmt werden kann nach

$$E = \frac{R \cdot T}{n \cdot F} \cdot ln \frac{100\text{-}MB_{H_2O}}{100} + C$$

Darin bedeuten

$P_{O2tr}$:  Sauerstoffpartialdruck des trockenen Meßgases
$P_{O2ft}$:  Sauerstoffpartialdruck des feuchten Meßgases

$MB_{H2O}$:  Feuchtegehalt des Meßgases in Vol-%

Es hat sich jedoch gezeigt, daß auch dieses Verfahren noch zu ungenaue und unbefriedigende Meßergebnisse liefert. Es wurde gefunden, daß die diesem Verfahren zugrundeliegende Annahme, wonach das Asymmetriepotential C, das heißt die unter der Bedingung Referenzgas = Meßgas bzw. gleicher Sauerstoffpartialdrücke an Referenz- und Meßelektrode von einem Zirkon-Meßelement abgegebene Spannung, eine Konstante ist, erst für Sauerstoffkonzentrationen ab bzw. oberhalb etwa 18 bis 20 Vol-% gilt. Sinkt die Sauerstoffkonzentration jedoch unter diesen Wert, so steigt das Asymmetriepotential mit sinkender Sauerstoffkonzentration immer steiler an, wobei die Abhängigkeitskurve einen in etwa hyperbolischen Verlauf zeigt.

Aus den Dokumenten EP-A-0434085 und US-A-4851103 wird außerdem ein Verfahren bekannt, wobei die Bestimmung der Feuchtigkeit eines Gases durch die Verwendung von zwei Sensoren, die bei unterschiedlichen Spannungen betrieben werden, erreicht wird.

Aufgabe der vorliegenden Erfindung ist es daher, ein verbessertes Verfahren zum Erfassen des Feuchtegehaltes von Gasen anzugeben, das in einfacher Weise ein genaues kontinuierliches Bestimmen des Feuchtegehaltes von Gasen mit sich ändernder Zusammensetzung ermöglicht.

Diese Aufgabe wird gelöst durch ein Verfahren zum kontinuierlichen Erfassen des Feuchtegehaltes von Gasen, insbesondere von Rauchgasen, mit sich ändernder Zusammensetzung, bei dem ein vom zu überwachenden Gasstrom abgezweigter Meßgasstrom geteilt und ein erster Teilstrom unmittelbar als Maßgas der einen Elektrode eines Feststoff-Elektrolyt-Meßelementes zugeführt wird, und bei dem der zweite Teilstrom auf eine definierte Restfeuchte getrocknet und dieses trockene Meßgas einer Elektrode eines zweiten Feststoff-Elektrolyt-Meßelementes zugeführt wird, wobei die zweite Elektrode der Feststoff-Elektrolyt-Meßelemente jeweils mit Referenzgasen konstanter Zusammensetzung beaufschlagt und die Meßwerte der beiden Feststoff-Elektrolyt-Meßelemente einer Rechenschaltung aufgeschaltet werden.

Als Feststoff-Elektrolyt-Meßelemente werden vorteilhafterweise Zirkon-Meßelemente eingesetzt.

Durch die Verwendung z.B. zweier Zirkon-Meßelemente und den getrennten Vergleich von feuchtem und trockenem Meßgas gegenüber jeweils Referenzgasen mit konstantem Sauerstoffanteil können die Asymmetriepotentiale der Zirkon-Meßelemente jeweils wieder als Konstanten angesehen und somit durch eine Meß- bzw. Rechenschaltung eliminiert werden. Aus dem Vergleich der Meßwerte für feuchtes und trockenes Meßgas kann dann der Feuchtegehalt des zu untersuchenden Gases bestimmt werden.

Werden gemäß einem weiteren Merkmal der Erfindung in beiden Zirkon-Meßelementen das gleiche Referenzgas verwendet, so kann der Rechenschaltung unmittelbar die Differenz der Ausgangsspannungen der beiden Zirkon-Meßelemente aufgeschaltet werden, da dann die Asymmetriepotentiale C beider Elemente gleich sind und sich als additives Glied der Nernst'schen Gleichungen bei der Differenzenbildung aufheben.

Für die Differenz der Ausgangsspannungen der Zirkon-Meßelemente für das feuchte und das trockene Meßgas ergibt sich dann die Beziehung

$$E_{ft} - E_{tr} = \Delta E = K \cdot \ln \frac{P_{O_2 ft}}{P_{O_2 tr}} \text{ mit } K = \frac{R \cdot T}{n \cdot F}$$

und das daraus wieder mit der Beziehung

$$P_{O_{2tr}} = P_{O_{2ft}} \cdot \frac{100}{100 - MB_{H_2O}}$$

für den Feuchtegehalt des zu untersuchenden Gases

$$MB_{H_2O} = 100 \left(1 - e^{\Delta E / k}\right)$$

Da der Verlauf der Abhängigkeitskurve des Asymmetriepotentiales vom Sauerstoffpartialdruck des Referenzgases in gewissen Grenzen auch noch von der Dotation der Zirkon-Keramik abhängt, ist es zweckmäßig, jeweils Zirkon-Meßelemente derselben Fertigungsserie zu verwenden, um möglichst exakte Ergebnisse zu gewährleisten.

Sind die Sauerstoffanteile der Referenzgase bekannt, ist es jedoch zweckmäßig, zunächst die Sauerstoffpartialdrücke jeweils des feuchten und des trockenen Meßgas-Teilstromes in der bei Gasen konstanter Zusammensetzung üblichen Weise durch den Zirkon-Meßelementen zugeordnete Analysatoren zu bestimmen und danach in der Rechenschaltung den Feuchtegehalt des zu untersuchenden Gases aus der einfacheren Beziehung

$$MB_{H_2O} = 100 \left(1 - \frac{P_{O_2 ft}}{P_{O_2 tr}}\right)$$

zu ermitteln. Dabei ist es nicht erforderlich, daß in beiden Zirkon-Meßelementen das gleiche Referenzgas verwendet wird. Es genügt in diesem Fall vielmehr, daß jeweils die Sauerstoffpartialdrücke der Referenzgase bekannt sind. Grundsätzlich bietet es sich jedoch an, als Referenzgas Umgebungsluft zu verwenden.

Die Trocknung des zweiten Meßgasteilstromes erfolgt vorteilhafterweise durch Abkühlung auf eine vorgegebene Taupunkttemperatur, bei der die Sättigung des Meßgas-Teilstromes nicht mehr von der Gaszusammensetzung abhängt, der getrocknete Meßgas-Teilstrom somit eine konstante, bekannte Restfeuchte hat, die meßtechnisch kompensiert werden kann. Bei Rauchgasen beispielsweise ist eine Abkühlung auf 2 °C zweckmäßig.

Zur Vermeidung von Meßschwankungen sollte im vom zu untersuchenden Gas abgezweigten Meßgasstrom ein konstantes Druckniveau aufrechterhalten werden. Das kann in einfacher Weise durch eine sog. Wasservorlage erreicht werden, in die eine von der Meßgasleitung, vor Teilung des Meßgasstromes, abzweigende Stichleitung geführt ist. Die Wasservorlage kann durch bei der Trocknung des zweiten Meßgas-Teilstromes anfallendes Kondensat gespeist werden.

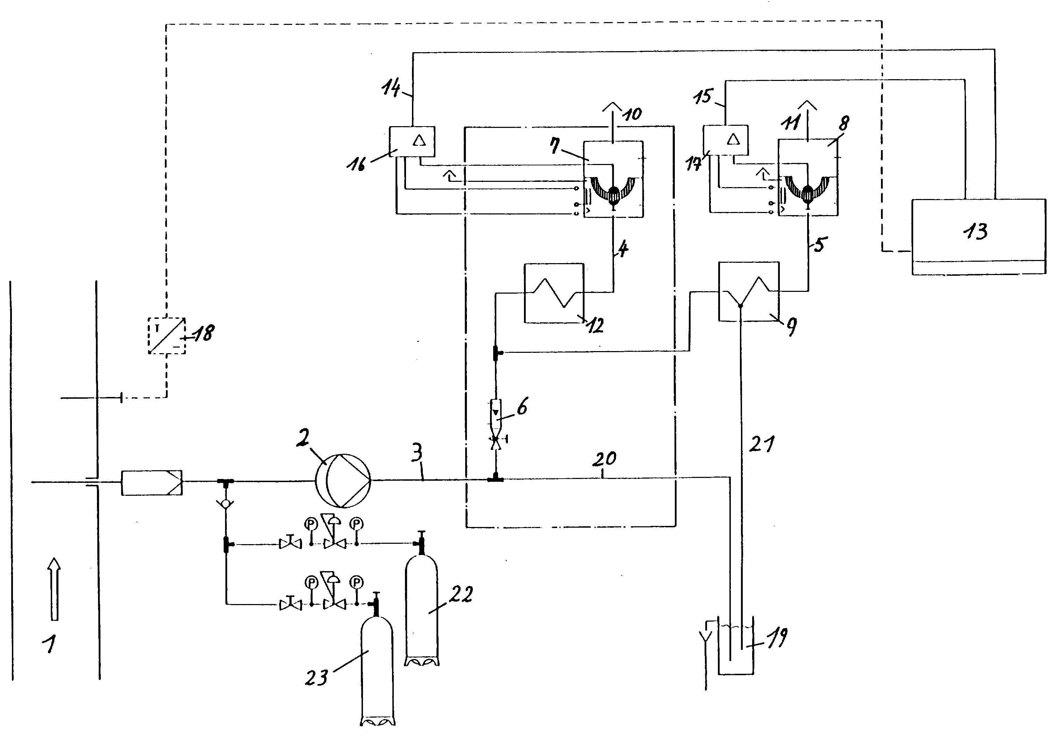

Anhand der in der Figur beispielhaft dargestellten Meßschaltung wird das erfindungsgemäße Verfahren weiter erläutert.

Zur Bestimmung des Feuchtegehaltes z. B. eines Rauchgases wird von dem Rauchgasstrom 1 über ein Gebläse 2 ein Meßgasstrom 3 abgezweigt, wobei der Meßgasstrom durch einen Strömungswächter 6 konstant gehalten und begrenzt, z. B. auf 90 l/h, wird. Dieser Meßgasstrom wird in zwei Teilströme aufgeteilt, wobei der erste Meßgas-Teilstrom 4 unmittelbar an der Meßelektrode eines Zirkon-Meßelementes 7 vorbeigeführt wird. Dem zweiten Meßgas-Teilstrom 5 wird dagegen in einem Meßgaskühler 9 durch Abkühlung beispielsweise auf 2 °C die Feuchte, bis auf die bekannte, der Temperatur von 2 °C entsprechende Restfeuchte entzogen. Der so getrocknete zweite Meßgas-Teilstrom 5 wird nun an der Meßelektrode eines zweiten Zirkon-Meßelementes 8 vorbeigeführt. Die Referenzelektroden sind mit Referenzgasen 10 bzw. 11 mit jeweils konstanter Zusammensetzung, d. h. konstanten Sauerstoffpartialdrücken, beaufschlagt.

Durch einen in den heißen, feuchten ersten Meßgas-Teilstrom 4 geschalteten Wärmetauscher 12 wird einmal sichergestellt, daß bei Rauchgasen z. B. der heiße Meßgas-Teilstrom 4 an keiner Stelle der Meßkette den für fossile Brennstoffe spezifischen Säuretaupunkt unterschreitet. Eine Unterschreitung des Säuretaupunktes würde z. B. zu Schwefelablagerungen führen. Gleichzeitig dient der Wärmetauscher 12 zur Kompensation des sog. Totvolumens des Meßgaskühlers 9. Dadurch ist gewährleistet, daß sich Schwankungen in der Zusammensetzung des Rauchgases und damit des Meßgases auf beide Zirkon-Meßelemente 7, 8 gleichzeitig auswirken und die Meßelektroden der Zirkon-Meßelemente 7, 8 stets von Meßgas mit - bis eben auf die Feuchte - gleicher Zusammensetzung beaufschlagt werden.

Die Meßwerte 14, 15 der Zirkon-Meßelemente 7, 8 werden einer Rechenschaltung 13 aufgeschaltet und der Feuchtegehalt des zu untersuchenden Gases ermittelt.

Grundsätzlich kann der Rechenschaltung unmittelbar die Differenz der Ausgangsspannungen der beiden Zirkon-Meßelemente 7, 8 aufgeschaltet werden. Dann allerdings muß in beiden Zirkon-Meßelementen 7, 8 das gleiche Referenzgas verwendet werden, damit sich bei der Bildung der Spannungsdifferenz die Asymmetriepotentiale aufheben.

Normalerweise wird jedoch der Sauerstoffpartialdruck des Referenzgases bekannt sein. Dann können, wie bei Gasen konstanter Zusammensetzung bekannt, in den Zirkon-Meßelementen 7,8 zugeordneten Analysatoren 16, 17 direkt die Sauerstoffpartialdrücke des feuchten und des trockenen Meßgases erfaßt und diese der Rechenschaltung 13 aufgeschaltet werden. Wegen der bei Kenntnis der Sauerstoffpartialdrücke einfacheren Bestimmungsgleichung für den Feuchtegehalt kann dann auch die Rechenschaltung 13 selbst einfacher gestaltet werden. Bei dieser Verfahrensweise könnten zwar grundsäztlich in den Zirkon-Meßelementen 7, 8 unterschiedliche Referenzgase 10 und 11 mit jeweils bekanntem Sauerstoffanteil verwendet werden, jedoch wird man in der Regel das gleiche Referenzgas, z. B. Umgebungsluft, verwenden.

In die Rechenschaltung 13 ist auch eine Korrektur der Restfeuchte des getrockneten Meßgas-Teilstromes 5 entsprechend der gegebenen Taupunkttemperatur integriert. Aus den Volumenanteilen des Wasserdampfes im Rauchgas kann rechnerisch die Taupunkttemperatur ermittelt werden. Unter Einbeziehung der über Fühler 18 erfaßten Rauchgastemperatur ist auch eine kontinuierliche Bestimmung der relativen Feuchte möglich. Bei Kenntnis der Feuchte im Rauchgas besteht, unter Einbeziehung einer kontinuierlichen $SO_3$-Messung, rechnerisch die Möglichkeit, den Säuretaupunkt kontinuierlich zu bestimmen.

Bei untypischen schnellen Änderungen bzw. bei Überschreiten eines Grenzwertes des Feuchtegehaltes des Rauchgases, z. B. eines Dampferzeugers, kann darüber hinaus ein Warnsignal ausgelöst werden, das auf die Gefahr eines sog. Rohrreißers hinweist.

Das Druckniveau im Meßgasstrom 3 sowie den Meßgas-Teilströmen 4, 5 wird im gezeigten Beispiel über eine Wasservorlage 19, in die eine von der Meßgasleitung abzweigende Stichleitung 20 geführt ist, konstant gehalten. Über diese Stichleitung 20 kann ggf. auch vom Gebläse 2 zuviel angesaugtes Meßgas entweichen. Die Vorlage 19 wird mit aus dem Meßgaskühler 9 abfließendem Kondensat 21 gespeist.

Zur Kalibrierung des Meßbereiches der Zirkon-Meßelemente 7, 8 werden den Meßelektroden trockene Prüfgase, ein Nullpunktgas 22 bzw. ein Edpunktgas 23 mit jeweils definiertem Sauerstoffanteil zugeführt. Als Nullpunktgas 22 kann z. B. Stickstoff mit 1 Vol-% Sauerstoff, als Endpunktgas 23 Stickstoff mit einem dem erforderlichen Meßbereich entsprechenden Sauerstoffanteil von z. B. 25 Vol-% verwendet werden. Ein Mindest-Sauerstoffanteil auch im Nullpunktgas 22 ist für die Funktion der Zirkon-Meßelemente notwendig. Er kann jedoch schaltungstechnisch kompensiert werden.

Die Erfindung ist nicht auf die Verwendung von Zirkon-Meßelementen bzw. Feststoff-Elektrolyt-Meßelemente beschränkt. Sie ist vielmehr auf andere potentiometrische Meßelemente zur Bestimmung von Sauerstoffpartialdruckdifferenzen anwendbar.

## Patentansprüche

1. Verfahren zum kontinuierlichen Erfassen des Feuchtegehaltes von Gasen, insbesondere von Rauchgasen, mit sich ändernder Zusammensetzung, bei dem ein vom zu überwachenden Gasstrom abgezweigter Meßgasstrom (3) geteilt und ein erster Teilstrom (4) unmittelbar als Meßgas der einen Elektrode eines Feststoff-Elektrolyt-Meßelementes (7) zugeführt wird, und bei dem der zweite Teilstrom (5) auf eine definierte Restfeuchte getrocknet und dieses trockene Meßgas einer Elektrode eines zweiten Feststoff-Elektrolyt-Meßelementes (8) zugeführt wird, wobei die zweite Elektrode der Feststoff-Elektrolyt-Meßelemente jeweils mit Referenzgasen (10,11) konstanter Zusammensetzung beaufschlagt und die Meßwerte der beiden Feststoff-Elektrolyt-Meßelemente einer Rechenschaltung (13) aufgeschaltet werden.

2. Verfahren nach Anspruch 1, wobei als Feststoff-Elektrolyt-Meßelemente Zirkon-Meßelemente verwendet werden.

3. Verfahren nach Anspruch 1 oder 2, wobei in beiden Feststoff-Elektrolyt-Meßelementen das gleiche Referenzgas verwendet und der Rechenschaltung unmittelbar die Differenz der Ausgangsspannungen der Festoff-Elektrolyt-Meßelemente aufgeschaltet wird.

4. Verfahren nach Anspruch 1 oder 2, wobei bei bekannten Sauerstoffanteilen der Referenzgase zunächst in den einzelnen Feststoff-Elektrolyt-Meßelementen zugeordneten Analysatoren (16,17) die Sauerstoffpartialdrücke des feuchten und des trockenen Meßgas-Teilstromes bestimmt und diese der Rechenschaltung aufgeschaltet werden.

5. Verfahren nach einem der Ansprüche 1 bis 4, wobei die Trocknung des zweiten Meßgas-Teilstromes durch Abkühlung in einem Meßgaskühler (9) auf eine vorgegebene Taupunkttemperatur erfolgt.

6. Verfahren nach Anspruch 5, wobei die Taupunkttemperatur 2° C beträgt.

7. Verfahren nach einem der Ansprüche 1 bis 6, wobei eine Druckstabilisierung in der Meßgasleitung über eine Wasservorlage erfolgt, in die eine von der Meßgasleitung vor Teilung des Meßgasstromes abzweigende Stichleitung geführt ist.

8. Verfahren nach den Ansprüchen 5 und 7, wobei die Wasservorlage mit Kondensat aus dem Meßgaskühler gespeist ist.

## Claims

1. Method for continuous detection of the moisture content of gases, in particular of flue gases, with a changing composition, whereby a measurement gas stream (3) tapped from the gas stream to be monitored is divided and a first part stream (4) is fed directly as measurement gas to one electrode of a solid electrolyte measuring element (7), and whereby the second part stream (5) is dried to a defined residual moisture level and this dry measurement gas is fed to an electrode of a second solid electrolyte measuring element (8), the second electrode of the solid electrolyte measuring elements being exposed in each case to reference gases (10, 11) of constant composition and the measurements of the two solid electrolyte measuring elements being applied to a computing circuit (13).

2. Method according claim 1, whereby zirconium measuring elements are used as solid electrolyte measuring elements.

3. Method according to claim 1 or 2, whereby the same reference gas is used in both solid electrolyte measuring elements and the difference between the output voltages of the solid electrolyte measuring elements is applied directly to the computing circuit.

4. Method according to claim 1 or 2, whereby with known oxygen levels in the reference gases, first the oxygen partial pressures of the moist and the dry measurement gas part stream are determined in analyzers (16, 17) associated with the individual electrolyte measuring elements and these are applied to the computing circuit.

5. Method according to one of claims 1 to 4, whereby the drying of the second measurement gas part stream is effected by cooling in a measurement gas cooler (9) to a pre-determined dewpoint temperature.

6. Method according to claim 5, whereby the dewpoint temperature is 2°C.

7. Method according to one of claims 1 to 6, whereby the pressure is stabilised in the measurement gas line by means of a water receiver into which a tap line branching off the measurement gas line prior to division of the measurement gas stream is guided.

8. Method according to claims 5 and 7, whereby the water receiver is supplied with condensate from the measurement gas cooler.

**Revendications**

1. Procédé pour la détection en continu de la teneur en humidité de gaz, notamment de fumées, de compositions variables, selon lequel on divise un flux de gaz de mesure (3) dérivé de la veine de gaz à surveiller, on fournit une première veine partielle (4) directement comme gaz de mesure à une électrode d'un élément de mesure à électrolyte solide (7), on sèche la seconde veine partielle (5) jusqu'à une humidité résiduelle déterminée et on fournit ce gaz de mesure, séché, à une électrode d'un second élément de mesure à électrolyte solide (8), la seconde électrode de l'élément de mesure à électrolyte solide recevant respectivement des gaz de référence (10, 11) de composition constante et les valeurs de mesure des deux éléments de mesure à électrolyte solide sont fournies à un circuit de calcul (13).

2. Procédé selon la revendication 1, caractérisé en ce qu' on utilise des éléments de mesure au zirconium comme élément de mesure à électrolyte solide.

3. Procédé selon la revendication 1 ou 2, selon lequel on utilise le même gaz de référence pour les deux éléments de mesure à électrolyte solide, et on applique directement la différence des tensions de sortie des éléments de mesure à électrolyte solide au circuit de calcul.

4. Procédé selon la revendication 1 ou 2, caractérisé en ce que pour des composants connus en oxygène dans les gaz de référence, on définit tout d'abord les pressions partielles d'oxygène de la veine partielle de gaz de mesure humide sec dans les analyseurs (16, 17) associés aux différents éléments de mesure à électrolyte solide et on définit la veine partielle de gaz de mesure sec pour appliquer cette information au circuit de calcul.

5. Procédé selon l'une des revendications 1 à 4, caractérisé en ce qu' on sèche la seconde veine partielle de gaz de mesure par refroidissement dans un refroidisseur de gaz de mesure (9) jusqu'à une température de point de rosée prédéterminée.

6. Procédé selon la revendication 5, caractérisé en ce que la température du point de rosée est égale à 2°C.

7. Procédé selon l'une des revendications 1 à 6, selon lequel on stabilise la pression dans la conduite de gaz de mesure par une réserve d'eau dans laquelle on fait passer la conduite de gaz de mesure avant l'embranchement de la conduite de dérivation divisant la veine de gaz de mesure.

8. Procédé selon les revendications 5 et 7, caractérisé en ce que la réserve d'eau est alimentée par le condensat du refroidisseur de gaz de mesure.